# FASCICULE DE BREVET EUROPEEN

(11) **EP 1 217 711 B1**
(45) Date de publication et mention de la délivrance du brevet: **31.12.2008**
(21) Numéro de dépôt: 01403022.5
(22) Date de dépôt: 26.11.2001
(51) Int. Cl.: H02J 1/10, H02J 13/00

(54) **Système de distribution d'énergie électrique et contacteur pour un tel système**
Elekrisches Stromverteilungssystem und Schalter für dasselbe System
Electric energy distribution system and contactor for such system

(30) Priorité: 21.12.2000 FR 0016758
(43) Date de publication de la demande: 26.06.2002
(73) Titulaire: AIRBUS France, 31060 Toulouse (FR)
(72) Inventeur: Foch, Etienne, 31000 Toulouse (FR); Lochot, Christophe, 31500 Toulouse (FR)
(74) Mandataire: Bonnetat, Christian

(56) Documents cités:
- WO-A-00/13290
- US-A- 5 894 413

## Description

La présente invention concerne les systèmes de distribution d'énergie électrique, ainsi que les contacteurs pour de tels systèmes.

On connaît déjà des systèmes de distribution d'énergie électrique comprenant :
- au moins deux circuits de distribution, à chacun desquels est associée une source d'alimentation électrique alimentant le circuit de distribution correspondant à travers un contacteur d'alimentation commandable ;
- au moins un contacteur d'interconnexion commandable, apte à relier entre eux lesdits circuits de distribution du côté desdits contacteurs d'alimentation opposé auxdites sources d'alimentation ; et
- un dispositif de commande commun de l'ensemble desdits contacteurs.

Ainsi, dans un tel système, montré, par example, dans EP-A-93654, chaque circuit de distribution est alimenté par sa propre source à travers le contacteur d'alimentation correspondant, mais, en cas de défaillance d'une source, ledit circuit de distribution correspondant peut être alimenté par la source d'au moins un autre circuit de distribution, à travers au moins un contacteur d'interconnexion.

Des systèmes de distribution de ce type sont notamment utilisés à bord des aéronefs. Dans ce cas, chaque circuit de distribution comprend généralement une barre conductrice de distribution alimentant en parallèle une pluralité de charges électriques et chaque source est constituée soit par une génératrice, entraînée par un moteur de l'aéronef ou par un moteur de servitude, soit par des batteries, ou bien encore par des transformateurs AC/DC ou DC/AC.

De tels systèmes connus de distribution d'énergie électrique présentent quelques inconvénients. En effet, afin d'éviter tout couplage intempestif des sources d'alimentation au moment de la commutation d'un contacteur d'interconnexion, ces systèmes connus, qui détectent en permanence l'état fermé ou ouvert de chaque contacteur, sont dans l'obligation d'attendre la confirmation de l'ouverture du contacteur d'alimentation associé à la source défaillante avant de commander la fermeture du ou des contacteurs d'interconnexion. Il en résulte donc un fonctionnement séquentiel imposant des limites à la rapidité de commutation desdits contacteurs. De plus, une telle détection en continu de l'état de chaque contacteur entraîne l'existence de liaisons filaires entre lesdits contacteurs et le dispositif de commande, ce qui augmente la masse et le coût desdits systèmes.

La présente invention a pour objet de remédier à ces inconvénients. Elle concerne un système de distribution du type mentionné ci-dessus, perfectionné de façon à bénéficier d'une plus grande rapidité de fonctionnement et à permettre la suppression des liaisons entre les différents contacteurs et le dispositif de commande commun.

A cette fin, selon l'invention, le système de distribution d'énergie électrique du type rappelé ci-dessus est remarquable :
- en ce que ledit dispositif de commande commun est un calculateur programmable actionnant lesdits contacteurs d'alimentation et d'interconnexion, à l'ouverture et à la fermeture et sans contrôle préalable de l'état ouvert ou fermé desdits contacteurs, suivant une table de vérité indiquant, pour chaque combinaison possible des états de fonctionnement corrects ou défaillants desdites sources d'alimentation électrique, l'état ouvert ou fermé que doit prendre chacun desdits contacteurs d'alimentation et d'interconnexion ; et
- en ce que, à chaque contacteur d'interconnexion, est associé un dispositif d'interdiction apte à interdire la fermeture dudit contacteur d'interconnexion si les bornes de contact de celui-ci sont simultanément sous tension.

Ainsi, en cas de défaillance d'une source d'alimentation, le fonctionnement du dispositif de commande n'est plus séquentiel et celui-ci peut procéder immédiatement aux commutations nécessaires pour alimenter le circuit relié à la source défaillante sans se préoccuper de l'état desdits contacteurs. Cependant, la sécurité est totale puisqu'aucune possibilité de couplage de sources d'alimentation n'existe, du fait de l'action desdits dispositifs d'interdiction de fermeture.

De préférence, également pour éviter toute possibilité de couplage de sources au moment de la mise en circuit d'une source, par exemple après mise en route ou arrêt d'une source, on prévoit que, à chaque contacteur d'alimentation, est aussi associé un dispositif d'interdiction, apte à interdire la fermeture dudit contacteur d'alimentation, si les bornes de contact de celui-ci sont simultanément sous tension.

Dans le cas usuel où ledit dispositif de commande commun est relié à chacun des contacteurs d'alimentation et d'interconnexion par une ligne de commande d'ouverture et par une ligne de commande de fermeture, ledit dispositif d'interdiction associé à un tel contacteur est interposé dans ladite ligne de commande de fermeture de ce contacteur. Un tel dispositif d'interdiction peut comprendre :
- deux détecteurs de tension, respectivement reliés auxdites bornes du contacteur correspondant ; et
- un dispositif logique, relié à ladite ligne de commande de fermeture et auxdits détecteurs de tension et interdisant la fermeture du contacteur correspondant si les bornes de contact de ce dernier sont simultanément sous tension.

Bien que le dispositif d'interdiction puisse former une unité rapportée à un contacteur de type connu, il est souvent préférable que ledit dispositif d'interdiction et ledit contacteur forment une seule unité de construction.

La présente invention concerne donc, de plus, un contacteur électrique du type comportant :
- deux bornes de contact et un organe mobile, pouvant occuper, par rapport auxdites bornes de contact, soit une position d'ouverture pour laquelle lesdites bornes de contact sont électriquement isolées l'une de l'autre, soit une position de fermeture pour laquelle ledit organe mobile assure la continuité électrique entre lesdites bornes de contact ; et
- un dispositif commandé pour l'actionnement dudit organe mobile entre ses deux positions, ledit dispositif d'actionnement comportant une première entrée de commande pour un ordre électrique d'ouverture et une seconde entrée de commande pour un ordre électrique de fermeture,
ce contacteur étant remarquable en ce qu'il incorpore, relié à ladite seconde entrée de commande pour l'ordre électrique de fermeture, un dispositif d'interdiction apte à interdire audit organe mobile de prendre sa position de fermeture si les bornes de contact dudit contacteur sont simultanément sous tension.

Avantageusement, le contacteur électrique de l'invention peut être tel que son dispositif d'interdiction comporte :
- deux détecteurs de tension, respectivement reliés auxdits bornes de contact du contacteur ; et
- un dispositif logique, disposé entre lesdits détecteurs de tension et ladite seconde entrée de commande du dispositif d'actionnement et apte à interdire la fermeture dudit contacteur si lesdites bornes de contact sont simultanément sous tension.

De préférence, ledit dispositif logique peut comporter :
- une première porte logique de type NON ET, dont les entrées sont respectivement reliées auxdits détecteurs de tension ; et
- une seconde porte logique de type ET, dont une entrée est reliée à la sortie de ladite première porte logique et dont la sortie est reliée à ladite seconde entrée de commande de fermeture dudit dispositif d'actionnement, l'autre entrée de ladite seconde porte logique recevant ledit ordre électrique de fermeture.

Les figures du dessin annexé feront bien comprendre comment l'invention peut être réalisée. Sur ces figures, des références identiques désignent des éléments semblables.
La figure 1 montre le schéma synoptique d'un système de distribution d'énergie électrique connu, dont la structure est choisie particulièrement simple de façon volontaire.
La figure 2 illustre, également sous la forme d'un schéma synoptique, le système de distribution d'énergie électrique de la figure 1, perfectionné conformément à la présente invention.
La figure 3 est le schéma électrique d'un exemple de dispositif logique pour la commande à la fermeture des contacteurs du système de distribution d'énergie électrique de la figure 2.

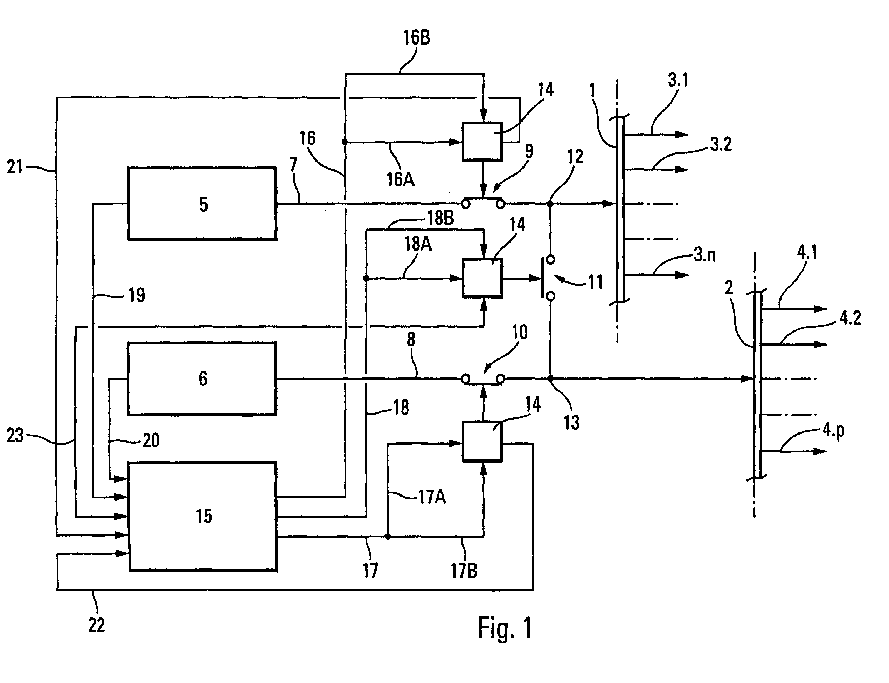

Le système de distribution d'énergie électrique connu, montré par la figure 1, présente, à des fins de clarté, une structure simple à seulement deux circuits de distribution. Chacun de ces circuits de distribution comporte une barre conductrice de distribution 1 ou 2, alimentant en parallèle une pluralité de charges (non représentées) au moyen de lignes 3.1 à 3.n et 4.1 à 4.p, respectivement, les indices n et p désignant des nombres entiers.

Chaque barre conductrice 1 ou 2 est elle-même alimentée en énergie électrique par une source d'alimentation électrique associée 5 ou 6, par l'intermédiaire d'une ligne d'alimentation 7 ou 8, sur laquelle est monté un contacteur d'alimentation 9 ou 10, respectivement.

Par ailleurs, un contacteur d'interconnexion 11 est prévu pour relier lesdites lignes d'alimentation 7 et 8 entre elles, ledit contacteur d'interconnexion 11 étant relié, d'un côté, à un point 12 de la ligne 7 disposé entre le contacteur d'alimentation 9 et la barre conductrice 1 et, de l'autre côté, à un point 13 de la ligne 8 disposé entre le contacteur d'alimentation 10 et la barre conductrice 2.

Les contacteurs 9, 10 ou 11 sont du type commandable, c'est-à-dire qu'ils peuvent être actionnés par un organe d'actionnement respectif 14, lesdits organes d'actionnement 14 recevant eux-mêmes des ordres électriques de commande de la part d'un dispositif de commande commun 15, par des liaisons de commande respectives 16, 17 et 18. Chacune desdites liaisons de commande 16, 17 et 18 comporte une ligne de commande à la fermeture, 16A, 17A et 18A respectivement, et une ligne de commande à l'ouverture, 16B, 17B et 18B respectivement.

Le dispositif de commande commun 15, par exemple du type à relais électromécaniques ou statiques, est de plus relié aux sources d'alimentation 5 et 6 par des lignes 19 et 20, respectivement, informant ledit dispositif de commande commun 15 de l'état de fonctionnement desdites sources d'alimentation. De même, par des lignes 21, 22 et 23, ledit dispositif de commande 15 est informé de l'état, ouvert ou fermé, des contacteurs 9, 10 et 11, respectivement.

En fonctionnement normal, c'est-à-dire lorsque les sources 5 et 6 délivrent leur alimentation nominale, le système se trouve dans l'état représenté sur la figure 1 :
- les contacteurs d'alimentation 9 et 10 sont à l'état fermé, en réponse à des ordres de fermeture, délivrés par le dispositif de commande commun 15 et transmis respectivement par les lignes de commande 16A et 17A ; et
- le contacteur d'interconnexion 11 est à l'état ouvert, en réponse à un ordre d'ouverture, délivré par le dispositif de commande commun 15 et transmis par la ligne de commande 18B.

Ainsi, la barre 1 et les lignes 3.1 à 3.n qui y sont reliées sont alimentées en énergie électrique par la source 5, à travers la ligne 7 et le contacteur d'alimentation 9. De façon semblable, la barre 2 et les lignes 4.1 à 4.p qui y sont reliées sont alimentées en énergie électrique par la source 6, à travers la ligne 8 et le contacteur d'alimentation 10.

Si, par exemple, le fonctionnement de la source d'alimentation 5 devient défaillant, ce fait est détecté, grâce à la ligne 19, par le dispositif de commande commun 15 qui, par la ligne 16B, commande l'ouverture du contacteur d'alimentation 9. Dès que l'ouverture de ce dernier est confirmée au dispositif de commande 15 par l'intermédiaire de la ligne 21, ce dernier commande la fermeture du contacteur d'interconnexion 11 par l'intermédiaire de la ligne 18A. La confirmation de la fermeture du contacteur d'interconnexion 11 est adressée au dispositif de commande commun 15 par la ligne 23.

On voit donc que, dans ce système connu représenté sur la figure 1, la fermeture du contacteur d'interconnexion 11 ne peut intervenir qu'après attente de la confirmation, par le dispositif de commande 15, de l'ouverture du contacteur d'alimentation 9 (ou 10).

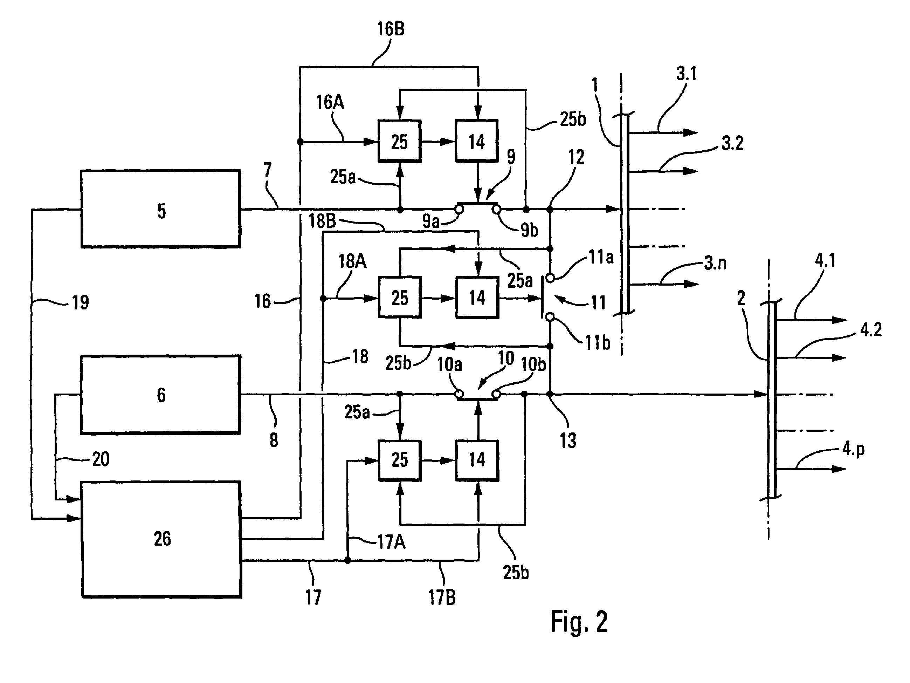

Le système de distribution à énergie électrique, conforme à la présente invention et illustré par la figure 2, comporte les mêmes éléments 1 à 14 et 16 à 20 que ceux décrits ci-dessus en regard de la figure 1, agencés de façon identique.

Les différences du système de la figure 2 par rapport à celui de la figure 1 sont les suivantes :
- les lignes 21, 22 et 23 entre, d'une part, les organes d'actionnement 14 associés respectivement aux contacteurs 9, 10 et 11, et, d'autre part, le dispositif de commande 15, sont supprimées ;
- dans chaque ligne 16A, 17A et 18A de commande à la fermeture des contacteurs 9, 10 et 11, respectivement, est agencé un dispositif 25, apte à interdire la fermeture du contacteur 9, 10 ou 11 correspondant, si les bornes de contact opposées 9a, 9b - 10a, 10b - 11 a, 11 b dudit contacteur sont simultanément sous tension ; et
- le dispositif de commande commun 15 est remplacé par un calculateur programmable 26, dans lequel est intégrée une table de vérité indiquant, pour chaque combinaison possible des états de fonctionnement des sources d'alimentation 5 et 6, l'état que doit prendre chaque contacteur 9, 10 et 11. Dans l'exemple simplifié du système de la figure 2, cette table de vérité est la suivante :

| | Etat de fonctionnement des | | Etat que doit prendre les | | |
|---|---|---|---|---|---|
| | source 5 | source 6 | contacteur 9 | contacteur 10 | contacteur 11 |
| S1 | correct | correct | fermé | fermé | ouvert |
| S2 | correct | défaillant | fermé | ouvert | fermé |
| S3 | défaillant | correct | ouvert | fermé | fermé |
| S4 | défaillant | défaillant | ouvert | ouvert | ouvert |

La situation S1 correspond au fonctionnement normal décrit ci-dessus et représenté sur la figure 2, tandis que la situation S4 n'est indiquée que par cohérence, puisqu'alors l'état des contacteurs 9, 10 et 11 est indifférent.

On voit ainsi que, le calculateur programmable 26 fonctionnant à partir de la table de vérité ci-dessus, et non plus séquentiellement, envoie, dans les situations S2 et S3, directement les différents ordres de fermeture et d'ouverture conformes à ladite table de vérité, sans être informé de l'état (ouvert ou fermé) des divers contacteurs. Le fonctionnement du système de la figure 2, conforme à la présente invention, peut donc être particulièrement rapide.

Cependant, malgré cette rapidité de fonctionnement, le système de distribution selon l'invention est particulièrement sûr, grâce à la présence des dispositifs d'interdiction 25 dans les lignes de commande à la fermeture 16A, 17A et 18A.

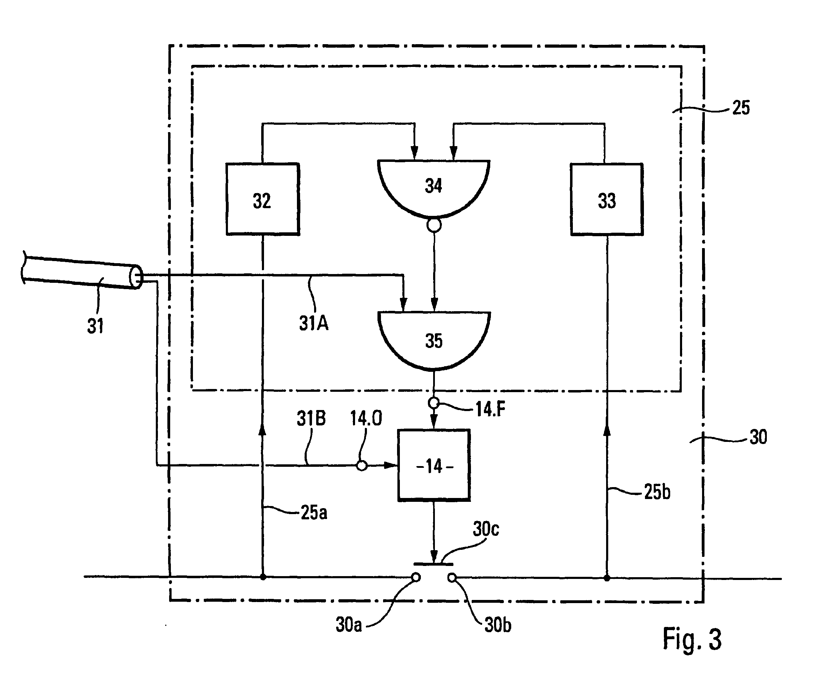

Sur la figure 3, on a illustré schématiquement un exemple de réalisation des dispositifs d'interdiction 25. Cet exemple de réalisation est associé à un contacteur 30 (qui peut être l'un des contacteurs 9, 10 ou 11) pourvu de deux bornes opposées 30a (représentative de l'une ou l'autre des bornes 9a, 10a, 11a) et 30b (représentative de l'une ou l'autre des bornes 9b, 10b, 11b). L'élément mobile 30c du contacteur 30 (semblable aux éléments mobiles, non reférencés, des contacteurs 9, 10 et 11) est commandé par un organe d'actionnement 14, tel que décrit ci-dessus.

Le dispositif d'interdiction 25 et l'organe d'actionnement 14 reçoivent leurs ordres de commande du dispositif de commande commun 26 par l'intermédiaire d'une liaison de commande 31 (qui peut être l'une des liaisons de commande 16, 17 ou 18) comportant une ligne 31A de commande à la fermeture (représentative de l'une ou l'autre des lignes de commande 16A, 17A, 18A) et une ligne 31B de commande à l'ouverture (représentative de l'une ou l'autre des lignes de commande 16B, 17B, 18B).

La ligne de commande à l'ouverture 31 B est reliée à l'entrée de commande à l'ouverture 14.0 de l'organe d'actionnement 14 et commande directement ce dernier.

Le dispositif d'interdiction 25 comporte deux détecteurs de tension 32 et 33, respectivement reliés aux bornes 30a et 30b du contacteur 30 par une ligne 25a ou 25b. Les signaux de sortie des détecteurs 32 et 33 sont appliqués aux deux entrées d'une porte NON ET 34, dont la sortie est appliquée à l'une des entrées d'une porte ET 35. L'autre entrée de la porte 35 est reliée à la ligne 31 A, tandis que la sortie de cette porte 35 est reliée à l'entrée de commande à la fermeture 14.F de l'organe d'actionnement 14.

Ainsi, dans le cas où les deux bornes 30a et 30b sont simultanément sous tension, les détecteurs 32 et 33 adressent un signal correspondant à la porte 34, qui bloque alors le fonctionnement de la porte 35. Si un ordre de fermeture arrive sur la ligne 31A, il ne peut être transmis à la borne 14.F, de sorte que le dispositif d'actionnement 14 ne peut fermer le contacteur 30.

En revanche, il est aisé de voir que dans tous les autres cas, c'est-à-dire en présence de tension sur une seule des bornes 30a, 30b ou bien sur aucune, l'ordre de fermeture est transmis par la porte 35.

Le fonctionnement du système de distribution de la figure 2 est donc le suivant :
- détection de la défaillance de la source 5 (ou 6) par le dispositif de commande commun 26 par l'intermédiaire de la ligne 19 (ou 20) ;
- envoi simultané, par ce dispositif de commande commun 26, de l'ordre d'ouverture du contacteur 9 (ou 10) à travers la ligne 16B (ou 17B) et de l'ordre de fermeture du contacteur 11 à travers la ligne 18A ;
- fermeture dudit contacteur 11 seulement après disparition de toute tension sur la borne 11a (ou 11b), grâce à l'action du dispositif d'interdiction 25 associé au contacteur 11.
   Bien entendu, si, par exemple après réparation de la source défaillante 5 (ou 6), le contacteur 9 (ou 10) est commandé à la fermeture, il ne pourra se fermer réellement que lorsque le contacteur 11 sera ouvert, puisque jusqu'à cette ouverture le dispositif d'interdiction 5 associé audit contacteur 9 (ou 10) détecte de la tension sur chacune des bornes 9a, 9b (ou 10a, 10b).
   Bien que l'exemple de système de distribution selon l'invention, décrit ci-dessus et illustré par la figure 2, soit particulièrement simple, on comprendra aisément que la présente invention n'est pas limitée à cet exemple et concerne également des systèmes de distribution comportant une pluralité de circuits de distribution et une pluralité de contacteurs d'interconnexion.

## Revendications

1. Système de distribution d'énergie électrique comprenant :
- au moins deux circuits de distribution (1, 2), à chacun desquels est associée une source d'alimentation électrique (5 ou 6) alimentant le circuit de distribution correspondant à travers un contacteur d'alimentation commandable (9, 10) ;
- au moins un contacteur d'interconnexion commandable (11), apte à relier entre eux lesdits circuits de distribution (1, 2) du côté desdits contacteurs d'alimentation (9, 10) opposé auxdites sources d'alimentation (5, 6) ; et
- un dispositif de commande commun de l'ensemble desdits contacteurs d'alimentation et d'interconnexion (9, 10, 11),
**caractérisé :**
- **en ce que** ledit dispositif de commande commun (26) est un calculateur programmable actionnant lesdits contacteurs d'alimentation et d'interconnexion (9, 10, 11), à l'ouverture et à la fermeture et sans contrôle préalable de l'état ouvert ou fermé desdits contacteurs, suivant une table de vérité indiquant, pour chaque combinaison possible des états de fonctionnement corrects ou défaillants desdites sources d'alimentation électrique (5, 6), l'état ouvert ou fermé que doit prendre chacun desdits contacteurs d'alimentation et d'interconnexion (9, 10, 11) ; et
- **en ce que**, à chaque contacteur d'interconnexion (11), est associé un dispositif d'interdiction (25) apte à interdire la fermeture dudit contacteur (11) si les bornes de contact (11a, 11b - 30a, 30b) de celui-ci sont simultanément sous tension.

2. Système de distribution d'énergie électrique selon la revendication 1,
**caractérisé en ce que**, à chaque contacteur d'alimentation (9, 10), est également associé un dispositif d'interdiction (25) apte à interdire la fermeture dudit contacteur si les bornes de contact (9a, 9b - 10a, 10b-30a, 30b) de celui-ci sont simultanément sous tension.

3. Système de distribution d'énergie électrique selon l'une des revendications 1 ou 2, dans lequel ledit dispositif de commande commun (26) est relié à chacun desdits contacteurs d'alimentation (9, 10) et d'interconnexion (11) par une ligne de commande d'ouverture (16B, 17B, 18B) et par une ligne de commande de fermeture (16A, 17A, 18A),
**caractérisé en ce que** ledit dispositif d'interdiction (25) associé à un tel contacteur est interposé dans ladite ligne de commande de fermeture (16A, 17A, 18A) de ce contacteur (9, 10, 11).

4. Système de distribution d'énergie électrique selon la revendication 3,
**caractérisé en ce que** ledit dispositif d'interdiction (25) comporte :
- deux détecteurs de tension (32, 33), respectivement reliés auxdites bornes du contacteur correspondant ; et
- un dispositif logique (34, 35), relié à ladite ligne de commande de fermeture et interdisant la fermeture du contacteur correspondant si les bornes de contact de ce dernier sont simultanément sous tension.

5. Contacteur électrique (30) comportant :
- deux bornes de contact (30a, 30b) et un organe mobile (30c), pouvant occuper, par rapport auxdites bornes de contact, soit une position d'ouverture pour laquelle lesdites bornes de contact sont électriquement isolées l'une de l'autre, soit une position de fermeture pour laquelle ledit organe mobile assure la continuité électrique entre lesdites bornes de contact ; et
- un dispositif commandé (14) pour l'actionnement dudit organe mobile (30c) entre ses deux positions, ledit dispositif d'actionnement (14) comportant une première entrée de commande (14.0) pour un ordre électrique d'ouverture et une seconde entrée de commande (14.F) pour un ordre électrique de fermeture,
**caractérisé en ce qu'**il incorpore, relié à ladite seconde entrée de commande (14.F) pour l'ordre électrique de fermeture, un dispositif d'interdiction (25) apte à interdire audit organe mobile de prendre sa position de fermeture si les bornes de contact (30a, 30b) dudit contacteur sont simultanément sous tension.

6. Contacteur électrique selon la revendication 5,
**caractérisé en ce que** ledit dispositif d'interdiction (25) comporte :
- deux détecteurs de tension (32, 33), respectivement reliés auxdites bornes de contact (30a, 30b) ; et
- un dispositif logique (34, 35), disposé entre lesdits détecteurs de tension (32, 33) et ladite seconde entrée de commande (14.F) du dispositif d'actionnement et apte à interdire la fermeture dudit contacteur si les bornes de contact de ce dernier sont simultanément sous tension.

7. Contacteur électrique selon la revendication 6,
**caractérisé en ce que** ledit dispositif logique comporte :
- une première porte logique (34) de type NON ET, dont les entrées sont respectivement reliées auxdits détecteurs de tension (32, 33) ; et
- une seconde porte logique (35) de type ET, dont une entrée est reliée à la sortie de ladite première porte logique (34) et dont la sortie est reliée à ladite seconde entrée de commande de fermeture (14.F) dudit dispositif d'actionnement (14), l'autre entrée de ladite seconde porte logique (35) recevant ledit ordre électrique de fermeture.

## Claims

1. An electrical energy distribution system comprising:
- at least two distribution circuits (1, 2), with each of which is associated an electrical power source (5 or 6) powering the corresponding distribution circuit through a controllable power contactor (9, 10);
- at least one controllable interconnection contactor (11), able to interlink said distribution circuits (1, 2) on that side of said power contactors (9, 10) which is away from said power sources (5, 6); and
- a common control device for the set of said power and interconnection contactors (9, 10, 11),
**characterized:**
- **in that** said common control device (26) is a programmable computer opening and closing said power and interconnection contactors (9, 10, 11), without prior checking of the open or closed state of said contactors, according to a truth table indicating, for each possible combination of the operating states, correct or defective, of said electrical power sources (5, 6), the open or closed state which each of said power contactors and interconnection contactor (9, 10, 11) must take; and
- **in that**, with each interconnection contactor (11), there is associated a prevention device (25) able to prevent the closure of said contactor (11) if its contact terminals (11a, 11b - 30a, 30b) are simultaneously energized.

2. The electrical energy distribution system as claimed in claim 1,
**characterized in that,** with each power contactor (9, 10), there is also associated a prevention device (25) able to prevent the closure of said contactor if its contact terminals (9a, 9b - 10a, 10b - 30a, 30b) are simultaneously energized.

3. The electrical energy distribution system as claimed in one of claims 1 or 2, in which said common control device (26) is linked to each of said power contactors (9, 10) and interconnection contactor (11) by an opening control line (16B, 17B, 18B) and by a closure control line (16A, 17A, 18A),
**characterized in that** said prevention device (25) associated with such a contactor is interposed in said closure control line (16A, 17A, 18A) of this contactor (9, 10, 11).

4. The electrical energy distribution system as claimed in claim 3,
**characterized in that** said prevention device (25) comprises:
- two voltage detectors (32, 33), respectively linked to said terminals of the corresponding contactor; and
- a logic device (34, 35), linked to said closure control line and preventing the closure of the corresponding contactor if its contact terminals are simultaneously energized.

5. An electrical contactor (30) comprising:
- two contact terminals (30a, 30b) and a moveable member (30c), which can occupy, with respect to said contact terminals, either an opening position for which said contact terminals are electrically isolated from one another, or a closure position for which said moveable member ensures electrical continuity between said contact terminals; and
- a controlled device (14) for actuating said moveable member (30c) between its two positions, said actuation device (14) comprising a first control input (14.0) for an electrical opening command and a second control input (14.F) for an electrical closure command,
**characterized in that** it incorporates, linked to said second control input (14.F) for the electrical closure command, a prevention device (25) able to prevent said moveable member from taking its closure position if the contact terminals (30a, 30b) of said contactor are simultaneously energized.

6. The electrical contactor as claimed in claim 5,
**characterized in that** said prevention device (25) comprises:
- two voltage detectors (32, 33), respectively linked to said contact terminals (30a, 30b); and
- a logic device (34, 35), disposed between said voltage detectors (32, 33) and said second control input (14.F) of the actuation device and able to prevent the closure of said contactor if its contact terminals are simultaneously energized.

7. The electrical contactor as claimed in claim 6,
**characterized in that** said logic device comprises:
- a first logic gate (34) of NAND type, whose inputs are respectively linked to said voltage detectors (32, 33); and
- a second logic gate (35) of AND type, of which an input is linked to the output of said first logic gate (34) and of which the output is linked to said second closure control input (14.F) of said actuation device (14), the other input of said second logic gate (35) receiving said electrical closure command.

## Patentansprüche

1. Elektrisches Stromverteilungssystem, umfassend:
- mindestens zwei Verteilungsstromkreise (1, 2), denen jeweils eine Stromversorgungsquelle (5 oder 6) zugeordnet ist, die den entsprechenden Verteilungsstromkreis über einen ansteuerbaren Leistungsschalter (9, 10) versorgt,
- mindestens einen ansteuerbaren Verbindungsschalter (11), der geeignet ist, die Verteilungsstromkreise (1, 2) auf der von den Stromquellen (5, 6) abgewandten Seite der Leistungsschalter (9, 10) miteinander zu verbinden und
- eine gemeinsame Steuereinrichtung für den gesamten Satz der Leistungs- und Verbindungsschalter (9, 10, 11),
**gekennzeichnet:**
- **dadurch, dass** die gemeinsame Steuereinrichtung (26) ein programmierbarer Rechner ist, der die Leistungs- und Verbindungsschalter (9, 10, 11) ohne Vorprüfung des offenen oder geschlossenen Zustands der Schalter zum Öffnen und Schließen betätigt gemäß einer Wahrheitstabelle, die für jede mögliche Kombination von korrekten oder fehlerhaften Betriebszuständen der Stromversorgungsquellen (5, 6) den offenen oder geschlossenen Zustand anzeigt, den jeder der Leistungs- und Verbindungsschalter (9, 10, 11) annehmen muss und
- **dadurch**, dass jedem Verbindungsschalter (11) eine Verhinderungseinrichtung (25) zugeordnet ist, die geeignet ist, das Schließen des Schalters (11) zu verhindern, wenn dessen Kontaktanschlüsse (11a, 11b - 30a, 30b) gleichzeitig unter Spannung stehen.

2. Elektrisches Stromverteilungssystem nach Anspruch 1,
**dadurch gekennzeichnet, dass** jedem Verbindungsschalter (9, 10) ebenfalls eine Verhinderungseinrichtung (25) zugeordnet ist, die geeignet ist, das Schließen des Schalters zu verhindern, wenn dessen Kontaktanschlüsse (9a, 9b - 10a, 10b - 30a, 30b) gleichzeitig unter Spannung stehen.

3. Elektrisches Stromverteilungssystem nach Anspruch 1 oder 2, bei dem die gemeinsame Steuereinrichtung (26) mit jedem der Leistungs- (9, 10) und Verbindungsschalter (11) durch eine Steuerleitung zum Öffnen (16B, 17B, 18B) und eine Steuerleitung zum Schließen (16A, 17A, 18A) verbunden ist,
**dadurch gekennzeichnet, dass** die einem solchen Schalter zugeordnete Verhinderungseinrichtung (25) in die Steuerleitung zum Schließen (16A, 17A, 18A) dieses Schalters (9, 10, 11) eingeschaltet ist.

4. Elektrisches Stromverteilungssystem nach Anspruch 3,
**dadurch gekennzeichnet, dass** die Verhinderungseinrichtung (25) Folgendes umfasst:
- zwei Spannungsdetektoren (32, 33), die jeweils mit den Anschlüssen des entsprechenden Schalters verbunden sind und
- eine Logikeinrichtung (34, 35), die mit der Steuerleitung zum Schließen verbunden ist und das Schließen des entsprechenden Schalters verhindert, wenn dessen Kontaktanschlüsse gleichzeitig unter Spannung stehen.

5. Elektrischer Schalter (30), umfassend:
- zwei Kontaktanschlüsse (30a, 30b) und ein bewegliches Teil (30c), das bezogen auf die Kontaktanschlüsse entweder eine Öffnungsstellung, bei welcher die Kontaktanschlüsse elektrisch voneinander isoliert sind, oder eine Schließstellung, bei welcher das bewegliche Teil die elektrische Kontinuität zwischen den Kontaktanschlüssen sicherstellt, einnehmen kann und
- eine angesteuerte Einrichtung (14), um das bewegliche Teil (30c) zwischen seinen beiden Stellungen zu betätigen, wobei die Betätigungseinrichtung (14) einen ersten Steuereingang (14.O) für einen elektrischen Öffnungsbefehl und einen zweiten Steuereingang (14.F) für einen elektrischen Schließbefehl umfasst,
**dadurch gekennzeichnet, dass** er eine mit dem zweiten Steuereingang (14.F) für den elektrischen Schließbefehl verbundene Verhinderungseinrichtung (25) aufweist, die verhindern kann, dass das bewegliche Teil seine Schließstellung einnimmt, wenn die Kontaktanschlüsse (30a, 30b) des Schalters gleichzeitig unter Spannung stehen.

6. Elektrischer Schalter nach Anspruch 5,
**dadurch gekennzeichnet, dass** die Verhinderungseinrichtung (25) Folgendes umfasst:
- zwei Spannungsdetektoren (32, 33), die jeweils mit den Kontaktanschlüssen (30a, 30b) verbunden sind und
- eine Logikeinrichtung (34, 35), die zwischen den Spannungsdetektoren (32, 33) und dem zweiten Steuereingang (14.F) der Betätigungseinrichtung angeordnet ist und die das Schließen des Schalters verhindern kann, wenn dessen Kontaktanschlüsse gleichzeitig unter Spannung stehen.

7. Elektrischer Schalter nach Anspruch 6,
**dadurch gekennzeichnet, dass** die Logikeinrichtung umfasst:
- ein erstes Logikgatter (34) des NAND-Typs, dessen Eingänge jeweils mit den Spannungsdetektoren (32, 33) verbunden sind und
- ein zweites Logikgatter (35) des AND-Typs, dessen einer Eingang mit dem Ausgang des ersten Logikgatters (34) verbunden ist und dessen Ausgang mit dem zweiten Steuereingang zum Schließen (14.F) der Betätigungseinrichtung (14) verbunden ist, wobei der andere Eingang des zweiten Logikgatters (35) den elektrischen Schließbefehl empfängt.
